(19) Europäisches Patentamt
European Patent Office
Office européen des brevets

(11) **EP 4 406 999 A1**

(12) **EUROPEAN PATENT APPLICATION**

(43) Date of publication:
**31.07.2024 Bulletin 2024/31**

(21) Application number: **24154110.1**

(22) Date of filing: **26.01.2024**

(51) International Patent Classification (IPC):
**C08K 3/26** *(2006.01)*     **C08K 3/36** *(2006.01)*
**C08K 5/092** *(2006.01)*     **C08L 23/12** *(2006.01)*
**B29C 44/42** *(2006.01)*

(52) Cooperative Patent Classification (CPC):
(C-Sets available)
**C08K 3/26; B29C 44/42; C08K 3/36; C08K 5/092;**
**C08L 23/12;** C08K 2003/262; C08K 2201/014

(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **27.01.2023 IT 202300001311**

(71) Applicant: **A.D. Compound S.p.A.**
**20122 Milano MI (IT)**

(72) Inventors:
• **Mercandalli, Davide**
  **20122 Milano MI (IT)**
• **Mercandalli, Andrea**
  **20122 Milano MI (IT)**

(74) Representative: **Perani & Partners S.p.A.**
**Piazza Armando Diaz, 7**
**20123 Milano (IT)**

(54) **COMPOSITION FOR INJECTION MOULDING OF ARTEFACTS, INJECTION MOULDING PROCESS AND GRANULE COMPOSITION PRODUCTION PROCESS**

(57)     The invention relates to a composition (C) for the injection moulding of articles, comprising or consisting of a first compound (A), including a polymer matrix, at least one weak organic acid, at least one inert aesthetic additive; and a second compound (B), including a polymer matrix, at least one carbonate or bicarbonate salt of, at least one inert aesthetic additive, wherein the first compound (A) is in a concentration comprised between 34% and 40% by weight, and the second compound (B) is in a concentration comprised between 60% and 66% by weight. The invention also relates to a process for the injection moulding of an article comprising or consisting of composition (C), comprising the steps of: preparing the composition (C), loading the composition (C) into an injection moulding plant, moulding an article under certain conditions. The invention also relates to an extrusion process for producing granules comprising or consisting of the first compound (A), or granules comprising or consisting of the second compound (B), comprising the steps of: preparing a polymer matrix comprising or consisting of one or more virgin-type thermoplastic polymers, and/or one or more recycled plastic materials; combining and mixing with the polymer matrix at least one inert aesthetic additive, and at least one weak organic acid, or at least one carbonate or bicarbonate salt, so as to obtain a precursor (a) of the first compound (A) or a precursor (b) of the second compound (B); loading the precursor (a) of the first compound (A) or the precursor (b) of the second compound (B) into an extruder; extruding under certain conditions; cutting the extrudate under certain conditions. Finally, the invention also protects artefacts comprising or consisting of the composition (C), which can be obtained by the above-mentioned injection moulding process.

Figure 3

(52) Cooperative Patent Classification (CPC): (Cont.)

C-Sets
**C08L 23/12, C08L 23/06, C08K 3/26, C08K 3/36,
C08K 5/092**

**Description**

**FIELD OF THE INVENTION**

The present invention relates to the technical field of compounds/compositions that can be used for the injection moulding of a wide variety of artefacts, and to the related injection moulding process.

**STATE OF THE ART**

Although it is the subject of much debate for ecological and environmental sustainability reasons, plastic still represents a versatile and relatively cheap resource for the production of a wide variety of artefacts.

As well as being used in technical fields, such as the automotive or aerospace industries, plastic is also used in the production of more widely consumed artefacts, such as furniture or giftware.

In these sectors, where the external appearance of the product is more important than in other sectors, it is necessary to be able to give the product surface or aesthetic characteristics that distinguish it from other products; that mimic the effects naturally present in natural raw materials.

Thus, there exist methodologies known in the prior art that make it possible to obtain, for example, relief surface effects (such as motifs, fretwork, knurling, embossing); or aesthetic effects (such as marbling) suitable to give the plastic product the appearance of a natural material.

The injection moulding (IM) technique, which is widely used in the plastic artefacts manufacturing sector, is one of the techniques used to obtain surface effects: pre-formed moulds that are provided with the desired pattern imprinted on the inner surface of the mould can be made. When the melted plastic enters the mould, it adapts to the pattern impressed on the mould and, as it cools, retains it as a permanent surface feature of the artefact.

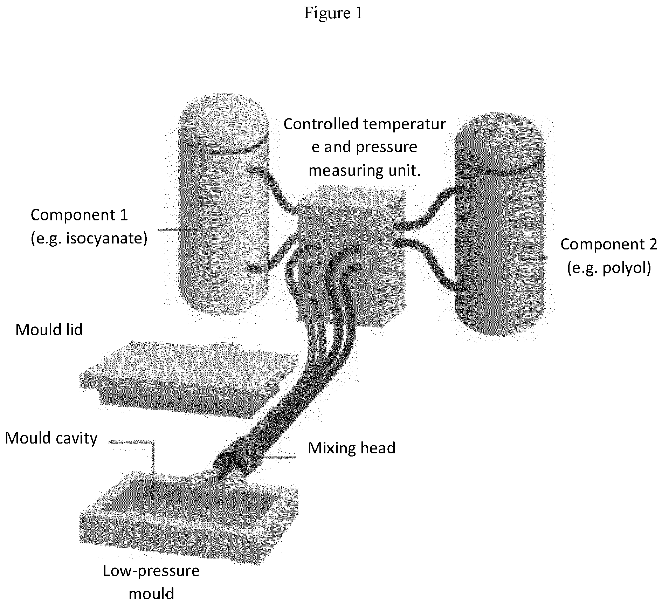

Another moulding technique that can be used for these purposes is the so-called reaction injection moulding (RIM): the process involves two or more materials (generally, isocyanate and a polyol) being conveyed separately into a mixing head, where they are combined under high pressure, and subsequently flow into a mould where they react/polymerise to form a moulded part (Figure 1).

The reactivity of the starting materials makes it possible to generate artefacts characterised by surface and/or aesthetic effects such as those already mentioned.

*Problems of the prior art*

RIM provides that the starting compounds are handled separately, as they are potentially reactive with each other: from transport, to storage, to plant design (as visible in Figure 1), the presence of two raw materials, which will only have to be combined when moulding actually takes place, at the level of the mixing head, must be taken into account. The maintenance and management of RIM plants (as well as the plant itself) therefore require higher costs than a traditional injection moulding plant.

Injection moulding, however, also has technical limitations in the production of artefacts characterised by surface and/or aesthetic effects: the use of preformed moulds is a considerably limiting solution, since the mould allows to produce manufactured articles with only one type of surface effect, in a - moreover - standardised manner (i.e. losing the uniqueness of the moulded part).

In order to manufacture different products, each with its own pattern, it follows that it is necessary to have available a dedicated mould for each desired pattern, resulting in an increase in production costs, in addition to maintenance costs.

Therefore, there is a need to find technical solutions for the production of injection-moulded plastic artefacts characterised by surface and/or aesthetic effects that do not require the use of different moulds for the production of different effects.

There is also a need to find technical solutions for the production of injection-moulded plastic artefacts characterised by surface and/or aesthetic effects that *are not* standardised or consistent, in order to create unique products that are never the same as the previously moulded artefact.

In the production of injection moulded artefacts, there are phenomena that lead to generate random (i.e. non-standardised) surface and/or aesthetic effects; these phenomena, however, are *undesirable* as they lead to the production of artefacts having surface defects that are generally unacceptable for marketing purposes.

Moreover, these phenomena are not *intentional* and, as such, are sometimes difficult to control.

The surface defect, in fact, is not just an aesthetic defect (which discredits the product from a purely appearance perspective) but constitutes a marker of a *non correct* performance of the production process, as well as of substantial defects that can be found in the product, which negatively affect the functionality and mechanical strength of the artefact.

In fact, injection moulding can be responsible for defects in the moulded product. Among the most common problems occurring during injection moulding is the gas formation during moulding. The step wherein gas release is most likely to occur is when the material is melted (due to the physical conditions under which it is carried out, which facilitate compound reactivity and volatile substance generation).

If gases are formed on the outer surface of the material, discoloured and/or thinned spots are generated; if gases are formed on the inner section of the material, voids/holes are generated deforming the material. In both cases, these defects can cause a reduction in the mechanical strength of the material.

The four main causes of gas pocket formation in plastic materials are considered to be: air (must be removed from the plastic, otherwise it risks remaining trapped in the polymer matrix, creating voids); water (moisture may enter the mould or have accumulated in the raw material. Water turns into water vapour, under heating conditions, generating voids in the melted plastic); volatile substances (some types of resins can generate gases when heated, due to the presence of substances that volatilise at low temperatures); overheating (some types of materials or additives can decompose at certain temperatures). This phenomenon does not only damage the plastic, but also generates the release of gas into the mould).

Generally, the injection heads of the moulding systems are provided with a degasser which makes it possible to release the gases expected to be produced by the raw material during the production process, under production conditions.

It is clear, however, that the degasser is not the solution to every problem of gas/water vapour/volatile substance formation; it is necessary that raw materials/instruments/operating conditions are selected/maintained/controlled to avoid and remove the presence of air, water, reactive or volatile substances, which are absolutely undesirable.

## SUMMARY OF THE INVENTION

The Applicant has now identified a technical solution with which it is possible to exploit, in a controlled manner, the generation of volatile substances during the injection moulding process, to create aesthetic/surface effects that do not require the use of pre-formed, dedicated moulds and which, for this reason, allow to obtain unique moulded pieces.

Thus, an object of the present invention is a composition (C) for the injection moulding of artefacts, comprising or consisting of:

- a first compound (A), which includes

    a polymer matrix,

    at least one weak organic acid

    at least one inert aesthetic additive

- a second compound (B), which includes

    a polymer matrix,

    at least one carbonate or bicarbonate salt

    at least one inert aesthetic additive, said at least one inert aesthetic additive being to the same or different from the first inert aesthetic additive

wherein

    the first compound (A) is in a concentration comprised between 34% and 40% by weight on the total weight of the composition,

    the second compound (B) is in a concentration comprised between 60% and 66% by weight on the total weight of the composition.

It is possible to obtain moulded artefacts using the composition (C) in an injection moulding process, which is further object of the present invention, and which comprises the steps of:

- preparing the composition (C),

- loading the composition (C) into an injection moulding plant,

- moulding an artefact under the conditions of
  moulding temperature comprised between about 235 °C and 245 °C injection rate comprised between about 2 cm$^3$/s and 4 cm$^3$/s injection pressure comprised between 600 MPa and 800 MPa

- cooling the artefact to a temperature comprised between 35 °C and 50 °C in a time comprised between 10 seconds and 20 seconds.

The artefacts comprising or consisting of composition (C) and obtained by injection moulding according to the above-mentioned process are also subject to protection.

A process is also claimed for extruding granules comprising or consisting of the first compound (A), or for extruding granules comprising or consisting of the second compound (B), comprising the steps of:

- preparing a polymer matrix comprising or consisting of one or more virgin-type thermoplastic polymers, and/or one or more recycled plastic materials, comprising one or more thermoplastic polymers, said one or more thermoplastic polymers including at least polyethylene (PE), polypropylene (PP) or mixtures of the foregoing, and optionally one or more mineral fillers;

- combining and mixing with the polymer matrix

  at least one inert aesthetic additive, and

  at least one weak organic acid, in the case of the first compound (A), or

  at least one carbonate or bicarbonate salt, in the case of the second compound (B) so as to obtain a precursor (a) of the first compound (A) or a precursor (b) of the second compound (B),

- loading the precursor (a) of the first compound (A) or the precursor (b) of the second compound (B) into an extruder,

- extruding at an extrusion temperature comprised between 160 °C and 210 °C (170 °C), at a number of screw revolutions comprised between 750 and 900 rpm, to obtain an extrudate of the first compound (A) or an extrudate of the second compound (B),

- cutting the extrudate at a die temperature comprised between 260° and 280 °C, at a number of blade revolutions comprised between 1100 and 1300 rpm, to obtain granules of the first compound (A) or granules of the second compound (B).

*Advantages of the invention*

The composition (C) allows to obtain an aesthetic effect to simply and cost-effectively mimic a natural effect, without the need to order moulds with a fixed pattern, dedicated to the production of a product with one (and only one) specific aesthetic/surface effect.

The composition (C) therefore allows to produce injection-moulded artefacts using any injection mould (including smooth ones, since the aesthetic effect does not depend on the presence of patterns/knurling/embossing on the mould).

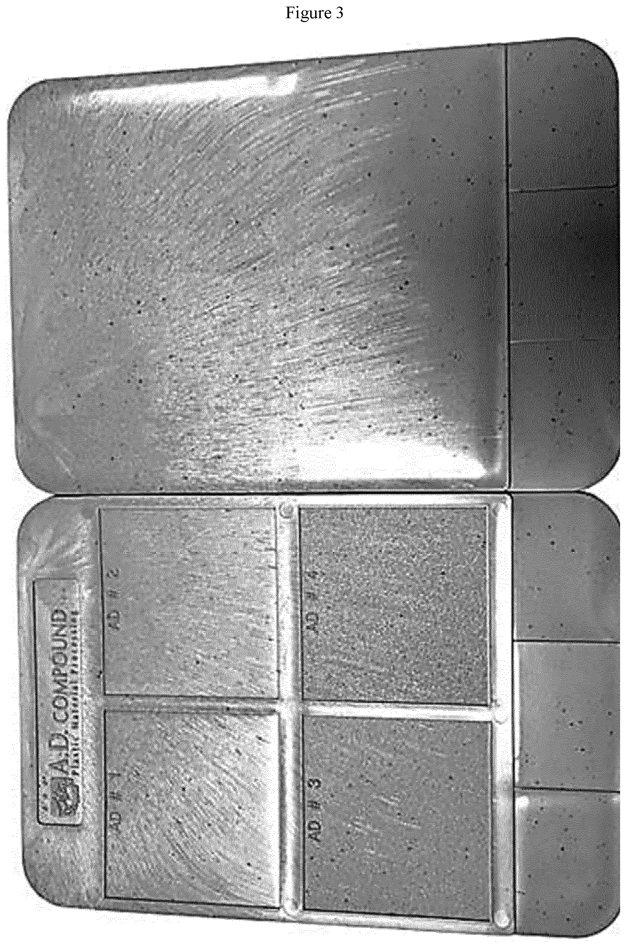

The aesthetic effect which is generated by moulding artefacts with the composition (C), which simulates a "flame" and "dot" on the moulded article (Figure 3), is due to the chemical reaction taking place between the organic acid and the carbonate/bicarbonate salt present in the first compound (A) and the second compound (B) respectively. This is an endothermic reaction that generates gaseous carbon dioxide and water as reaction products. The production of gaseous $CO_2$ and water (which at process temperatures is also in gaseous form) during the reaction, leads to an effervescence that, during the step of conditioning the artefact inside the mould (i.e. the step after the injection of the material into the mould, during which the mould is closed and the part cools and compacts), serves as a "propellant" for the inert aesthetic additives, which are dragged along the polymer matrix, generating surface effects such as "flames" and "dots", which are characteristic of the material.

The inert aesthetic additive, therefore, is not reactive during the production of the article, but contributes to forming the aesthetic effect by providing a visible element within the polymer matrix that, when displaced due to gas generation, generates the aforementioned aesthetic effect.

The peculiarity of moulded artefacts with this product lies in the fact that, since these "flashes" and "dots" are random, each piece is different from the previous one.

It should also be noted that the first compound (A) and the second compound (B) do not react with each other until the injection moulding process is started: this guarantees a considerable advantage in terms of storage and transport of the material, since the first (A) and second compound (B) can be mixed, in the proportions required for a correct reaction, upstream in the production chain, without risking unwanted reactions. Only one product can thus be advantageously supplied to the moulder: the composition (C).

The injection moulding process using the composition (C), by virtue of the dedicated operating conditions, allows to manufacture artefacts that, although gas is generated during the production steps, do not have any substantial defects that could compromise the stability or mechanical strength of the piece.

The composition (C) meets the technical requirements of the market for plastic compositions intended for injection moulding processes (e.g. MFI, impact resistance, stiffness), enabling the production of functional artefacts provided with a unique aesthetic effect and easy to manufacture.

The injection moulding process of the invention, moreover, can be applied both to the production of artefacts from virgin material as well as recycled material, which is also advantageous with a view to fostering a circular economy and implementing environmentally sustainable production. The composition (C), as well as the manufactured product obtained therefrom, when prepared using recycled materials (such as industrial plastic waste, post-consumer materials, etc.) guarantee cost containment, and the recycling of plastic materials, which can thus be given a second life.

The extrusion process for the production of granules comprising or consisting of the first or second compound (A, B) was developed in order to produce granules suitable for subsequent moulding processes, preventing the material and its components from degrading (thus risking the two compounds becoming inactivated prior to moulding). For this purpose, it is important that the first compound (A) and the second compound (B) are made separately from each other.

## DESCRIPTION OF THE DRAWINGS

Figure 1: schematic representation of a reaction injection moulding (RIM) plant. As visible in the figure, the isocyanate and polyol supply tanks are separate; the two materials are supplied separately to the mixing head in order to prevent reaction/polymerisation between the two materials from occurring earlier than expected.

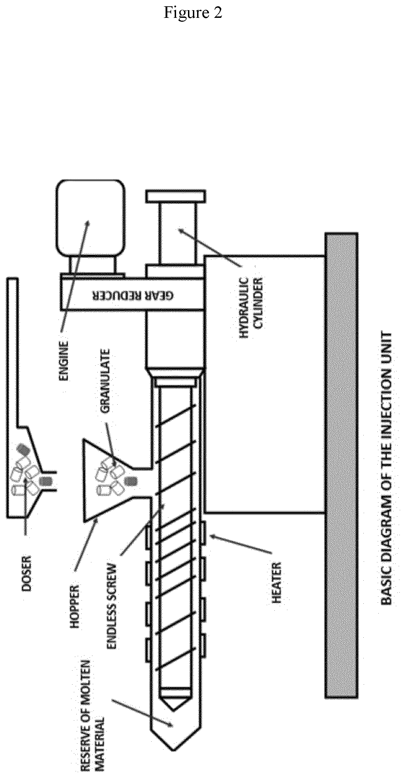

Figure 2: Basic diagram of an injection unit of a classic injection moulding plant.

Figure 3: photograph of a plate moulded according to the invention, from which the "flamed" and "dotted" effect referred to is visible.

## DETAILED DESCRIPTION OF THE INVENTION

Before describing the technical aspects of the invention in more detail, a few definitions that are useful for the intelligibility of the text are provided.

*Thermoplastic polymer* refers to a plastic polymer that reacts to heat by softening and acquiring a malleability that allows it to be modelled to form finished products. By cooling, the thermoplastic polymer again acquires stiffness and, if pure, the softening and cooling process can be repeated several times without altering the material properties.

*Virgin* or *virgin polymer* refers to a material or polymer produced directly from a petrochemical raw material, such as natural gas or crude oil, and which has never been used for manufacturing plastic products/pieces.

*Recycled plastic material* refers to a product or part of a product comprising or consisting of non-virgin thermoplastic polymers. The recycled plastic material, in other words, is a product or part of a product comprising or consisting of thermoplastic polymers that have already been used (post-consumer materials, such as parts of crashed machines or laminated plastics for food use), or that have been discarded by industries because they are defective or do not comply with the technical requirements for their production/use (waste materials from the plastics industry).

*Multilayer laminated plastic material* refers to a composite material comprising a plurality of overlapping layers, wherein the aforesaid layers are made of plastic heteropolymers such as polyolefins and polyesters or derivatives of the foregoing. By way of example and not limitation, polymers commonly used to make multilayer laminates are polyethylene (PE), ethinylvinyl alcohol (EVOH), and polyethylene terephthalate (PET). Multilayer laminated plastics sometimes comprise intermediate layers with an adhesive or bonding function (such as layers consisting of ethylene vinyl acetate (EVA) ); with a barrier function (such as metallisation or EVOH layers); dyeing function (such as $TiO_2$-based layers). The intermediate layers make up only a small part by weight on the total weight of the composite material, generally < 1% by weight. As such, multilayer laminated plastic materials are difficult to recycle because there are no user-friendly technologies for post-industrial deconstruction of multilayer material into separately recyclable "pure" polymers. Generally, a multilayer laminated plastic material is in the form of a film, with a variable thickness (15-500 $\mu$m). By way of example and not limitation, multilayer laminated plastic materials are typically used in the food industry to make packaging or bags.

### Composition (C) for injection moulding of artefacts.

As already mentioned, the composition (C) comprises or consists of

- a first compound (A), based on plastic material, and

- a second compound (B), also based on plastic material, wherein

the first compound (A) is in a concentration comprised between about 34% to 40%, preferably equal to about 34%, 35%, 36%, 37%, 38%, 39%, 40% by weight on the total weight of the composition,
the second compound (B) is in a concentration comprised between about 60% to 66%, preferably equal to about 60%, 61%, 62%, 63%, 64%, 65%, 66% by weight on the total weight of the composition.

The percentage in which the first compound (A) and the second compound (B) are combined is intended to ensure that, at the time of moulding, the composition (C) is reactive enough to achieve the desired aesthetic/surface effect; and that the reaction between the acid and the base can be controlled by applying the operating conditions of the moulding process.

Note that, the first compound (A) comprises

a polymer matrix,

at least one weak organic acid

at least one inert aesthetic additive; and

the second compound (B), includes

a polymer matrix,

at least one carbonate or bicarbonate salt

at least one inert aesthetic additive, said at least one inert aesthetic additive being to the same or different from the first inert aesthetic additive.

Preferably, the first compound (A) and the second compound (B) also contain further additives, in addition to the inert aesthetic additive: preferably these further additives are process additives, formula additives and/or dye masters: by way of example and not limitation, additives suitable for the purposes of the invention are antioxidants (e.g. Pentaerythritol tetrakis(3-(3,5-di-tert-butyl-4-hydroxyphenyl)propionate); Tris(2,4-di-tert-butylphenyl) phosphite); UV protectants, such as HALS *(hindered amine light stabilisers)* (e.g. bis(2,2,6,6-tetramethylpiperidin-4-yl) decanedioate); N,N'-bis(2,2,6,6-tetramethylpiperidin-4-yl)hexane-1,6-diamine;2,4,6-trichloro-1,3,5-triazine2,4,4-trimethylpentan-2-amine); cross-linking agents (Peroxide, [1,4-phenylenebis(1-methylethylidene)]bis[(1,1-dimethylethyl)].

Still preferably, these further additives are globally in concentrations comprised between 0.05% and 1.5% by weight on the total weight of the first compound (A) or the second compound (B).

According to a preferred embodiment, the composition (C) comprises or consists of:

- the first compound (A), including

the polymer matrix in a concentration comprised between about 94% and 98%, preferably about 95% and 97%, preferably equal to about 95%, 95.5%, 95.6%, 96%, 96.5%, 97%, 97.5% by weight on the total weight of the first compound (A) (w/w),

the at least one weak organic acid in a concentration comprised between about 0.5% and 0.8%, preferably equal to about 0.5%, 0.6%, 0.7%, 0.8% (w/w),

the at least one inert aesthetic additive in a concentration comprised between about 1.2% and 4.5%, preferably between about 1.2% and 3.5%, preferably between about 1.2% and 2.5%, preferably equal to about 1.2%, 1.6%, 1.8%, 2.0%, 2.2%, 2.4% (w/w),

- and the second compound (B), including

the polymer matrix, in a concentration comprised between about 94% and 98% by weight on the total weight of the second compound (w/w), preferably between about 95% and 97%, preferably equal to about 95%, 95.5%, 95.6%, 96%, 96.5%, 97%, 97.5% by weight on the total weight of the second compound (B) (w/w),

the at least one carbonate or bicarbonate salt, in a concentration comprised between about 1.0% and 2.7%, preferably between about 1.5% and 2.5%, preferably between about 1.5 % and 2.0 %, preferably equal to about 1.6%, 1.8%, 2.0% (w/w),

the at least one inert aesthetic additive in a concentration comprised between about 1% and 3.3% (w/w), preferably between about 1.2% and 4.0%, preferably between about 1.2% and 3.5%, preferably between about 1.2% and 2.5%, preferably equal to about 1.2%, 1.6%, 1.8%, 2.0%, 2.2%, 2.4% (w/w).

Still preferably, the composition (C) comprises or consists of:

- the first compound (A), including

the polymer matrix in a concentration equal to about 95.6% (w/w),

the at least one weak organic acid in a concentration equal to about 0.6% (w/w),

at least one inert aesthetic additive in a concentration equal to about 1.8% (w/w),

and further process additives and/or dye masters, in a concentration equal to about 2.0% (w/w)

- and the second compound (B), including

the polymer matrix, in a concentration equal to about 95% (w/w),

the at least one carbonate or bicarbonate salt, in a concentration equal to about 2.0 % (w/w),

at least one inert aesthetic additive in a concentration equal to about 1.8% (w/w)

and further process additives and/or dye masters, in a concentration equal to about 1.2% (w/w).

_Polvmer matrix._

Regardless of whether it is the first or the second compound, a polymer matrix is defined as a mixture (or polymer resin) comprising or consisting of:

- one or more thermoplastic polymers, of the virgin type, and/or

- one or more recycled plastic materials, comprising the one or more thermoplastic polymers,

said one or more thermoplastic polymers including at least polyethylene (PE), polypropylene (PP) or mixtures of the foregoing.
It should be noted that, preferably, the recycled plastic materials suitable for implementing the invention, as well as the one or more thermoplastic polymers, are selected from materials or polymers having a melting temperature comprised between about 120 °C and 255 °C, preferably between 140 °C and 255 °C.
Still preferably, recycled plastics are selected from those with a neutral or white colouring: the reason for this choice is functional to make visible the "flamed" and "dotted" effect generated by dragging the inert aesthetic additive, by virtue of the contrast of colour between the polymer matrix (light-coloured) and the additive itself (dark-coloured).
Therefore, thermoplastic polymers and plastic materials characterised by a low content of light-coloured mineral fillers, such as - for example - titanium oxide (TiO$_2$) are preferred. Still preferably, such fillers, and preferably titanium oxide, are in a concentration lower than 2 wt% by weight on the total weight of the composition. High concentrations of titanium dioxide or other light-coloured/white mineral fillers may, in fact, make the "flame" and "dot" aesthetic effect less visible, even in the presence of the inert aesthetic additive.

Note that the composition (C) may globally include an amount of recycled plastic ≥ 66%, preferably comprised between 66% and 90% by weight, on the total weight of the composition (w/w).

According to a preferred embodiment, the polymer matrix globally comprises

- polypropylene, in concentrations ≥ 70%, preferably comprised between about 70% and 95%, preferably between about 73% and 90%, preferably between about 73% and 88% by weight on the total weight of the polymer matrix, and

- polyethylene, in concentrations ≤ 20%, preferably comprised between about 3% and 20%, preferably between about 3% and 15%, preferably between about 3% and 10% by weight on the total weight of the polymer matrix, and

- optionally, mineral fillers.

Other polymers may be present in the polymer matrix, such as polyethylene terephthalate (PET) in smaller percentages, preferably lower than 6% by weight on the total weight of the polymer matrix.

Preferably, the polymer matrix of the first compound (A) and the polymer matrix of the second compound (B) are equal to each other.

According to a preferred embodiment, the polymer matrix also contains mineral fillers which are present in the recycled plastic material or are added while preparing the first or second compound in order to achieve specific flow characteristics, increase the volume of the polymer matrix, reduce the cost of the product, improve abrasion resistance, achieve non-slip surfaces, etc.

By way of example and not limitation, mineral fillers are preferably selected from the group consisting of carbonate (e.g. calcium carbonate), dolomite, meudon white, marble granulates, titanium dioxide, quartz, feldspar, round quartz, silica sands, barite, talc, kaolin, mica, lithopone, lime, zinc phosphate, aluminas, gypsum, calcium sulphate, aluminium silicates, diatomaceous earth, aluminous cement.

It should be noted that the mineral fillers are contained in the first compound (A) or in the second compound (B) in concentrations preferably comprised between about 5% and 30%, preferably between about 7% and 28%, preferably between about 9% and 25%, preferably between about 10% and 22%, preferably equal to about 10%, 11%, 12%, 13%, 14%, 15%, 16%, 17%, 18%, 19%, 20% by weight on the total weight of the first compound (A) or the second compound (B).

The mineral fillers, therefore, constitute between about 10% and 25% by weight on the weight of the polymer matrix, preferably between 10% and 22% by weight on the weight of the polymer matrix; while the combination of the one or more virgin-type thermoplastic polymers and/or the one or more recycled plastic materials constitute between about 75% and 90% by weight on the weight by weight of the polymer matrix, preferably between about 78% and 90% by weight on the weight of the polymer matrix.

*Inert aesthetic additive.*

The inert aesthetic additive, as already mentioned, is essential for the composition (C) because without it - and without the selected acid and base - the aesthetic/surface effect ("flamed" and "dotted") cannot be achieved.

It should be noted that the aesthetic additive is referred to as *inert* because, under the conditions of production of the granulate comprising or consisting of the first compound (A) and comprising or consisting of the second compound (B), as well as under the moulding conditions of an artefact comprising or consisting of the composition (C), the additive does not have the tendency to react with the other components of the compound and the composition (or, if it does, it does so in a manner negligible for the purposes of the invention).

Still preferably, the inert aesthetic additive is characterised by a degradation or melting temperature higher than 250°C.

It is, in fact, important that the additive remains as it is (in corpuscular form) within the polymer matrix of the first compound (A) and the second compound (B), since the "flame" or "dot" aesthetic/surface effect is generated due to its physical movement within the polymer matrix, under the pressure of the gases (CO$_2$ and H$_2$O) generated during the acid/base reaction.

In this regard, it should be noted that coloured pigments are not suitable as inert aesthetic additives, as they tend to disperse in the polymer matrix of the first compound (A) or the second compound (B), imparting an even and uniform colouring (without being able to give the desired "flamed" and "dotted" aesthetic effect).

Preferably, the inert aesthetic additive is dark in colour (such as black, dark grey, brown, metallic colour, etc.),

so that there is enough contrast between the colour of the polymer matrix, possibly including mineral filler, and the inert aesthetic additive itself.

According to a preferred embodiment, the inert aesthetic additive is preferably selected from the group consisting of: quartz, slate, vulcanised tyres, wood and mixtures of the foregoing.

Still preferably, the inert aesthetic additive has a particle size ≤ 1200 μm, preferably comprised between 700 and 900 μm, preferably measured under an optical microscope by determination of the projection diameter.

The inert aesthetic additive contained in the first compound (A) may be the same or different from the one included in the second compound (B). Preferably the inert aesthetic additive of the first and second compounds are the same.

*Weak organic acid.*

The first compound (A) comprises at least one weak organic acid, where a weak acid is defined as an acid preferably characterised by a pKa (in the case of a multi-carboxylic acid, characterised by a first dissociation pKa) higher than about 2.6, preferably comprised between 2.7 and 5.0.

It should be noted that the at least one weak organic acid suitable for the purposes of the invention must have good water solubility, since the acid-base reaction will take place using the residual water present in the composition (C).

It should be noted, in fact, that the composition (C) is preferably characterised by a water content comprised between about 0.05% and 0.15%, preferably comprised between about 0.08% and 0.15%, preferably between about 0.10% and 0.15% by weight on the total weight of the composition.

Note that the moisture content can be determined with the use of a thermobalance. Preferably, the following procedure is followed: a sample of the composition (C) is taken and placed in the sample holder of a thermobalance, in order to acquire weight thereof (generally, a sample of about 30 g is taken). Having acquired the initial weight of the sample (Pi), the heating process is started at 140 °C for 8 minutes. After the heating step, the final weight of the sample (Pf) is acquired. The moisture content is calculated as the percentage weight difference detected by the thermobalance, on the initial weight of the sample {[(Pi - Pf)/Pi] x 100}.

Preferably, the at least one weak organic acid that can be used for the purposes of the invention has a water solubility of at least 2.4 mg/mL (20 °C). Still preferably, the at least one weak organic acid has a water solubility between 2.4 mg/mL (20 °C) and about 600 mg/mL (20 °C).

Still preferably, the at least one weak organic acid is a dicarboxylic acid, preferably selected from the group consisting of citric acid, azelaic acid, adipic acid, tartaric acid, malic acid, fumaric acid and combinations of the foregoing.

Depending on the preferred embodiment, the weak organic acid is citric acid or azelaic acid.

*Carbonate or bicarbonate salt.*

The second compound (B) comprises at least one carbonate or bicarbonate salt.

Preferably, the at least one carbonate or bicarbonate salt is a sodium, potassium or calcium salt or mixtures of the foregoing. Still preferably, at least one carbonate or bicarbonate salt is a sodium or potassium salt.

Still preferably, the at least one carbonate or bicarbonate salt is sodium monoacid carbonate.

Preferably, the first compound (A) and the second compound (B) are combined in the composition (C) so that the molar ratio between the acid and the base is comprised between about 0.5 and 1.5, preferably comprised between about 0.7 and 1.4, preferably comprised between about 0.7 and 1.3, preferably equal to 0.75, 0.8, 0.85, 0.9, 0.95, 1.0, 1.1, 1.2 and 1.25.

*Physical Properties of the Composition (C).*

Preferably, the composition object of the invention comprises the first compound (A) and the second compound (B) in the form of granules, preferably having an average size between 1.9 mm and 3.0 mm, preferably of about 2.4 mm. It should be noted that, in accordance with this embodiment, the composition (C) includes: a) granules of the first compound (A), each granule of the first compound (A) comprising or consisting of the first compound (A); and b) granules of the second compound (B), each granule of the second compound (B) comprising or consisting of the second compound (B).

Preferably, the granule size is established on the basis of the size of the cutting die used to cut the extruded compound (A) or compound (B). Alternatively, a person skilled in the art would have the expertise to identify suitable methodologies or techniques for measuring the particle size of the composition (C) granules (e.g. using an optical microscope and taking advantage of the projection diameter). Note that the size average values referred to are calculated on the basis of a weighted average.

Still preferably, the composition (C), as well as the first compound (A) and the second compound (B), are characterised by the following properties:

- a Young's modulus ≥ 1100 MPa, preferably comprised between 1100 MPa and 1400 MPa (ISO 527, 23°C, 2 mm/min) and/or

- an impact strength on shear specimens comprised between 2.00 and 7.00 KJ/m$^2$ (ISO 179-1/1eA, 23°C), and/or

- a polymer melt flow index (better known as *melt flow index*) comprised between 20.0 and 25.0 g/10 min (ISO 1133, 230°C, 2.16 kg), and/or

- a density (ISO 1183, 23°C) comprised between 1.039 and 1.063 g/cm$^3$.

The composition (C) is also characterised by an apparent density comprised between about 460 kg/dm$^3$ and 600 kg/dm$^3$, preferably of 560 kg/dm$^3$.

The apparent density is preferably measured as follows: a weighing scale, a transparent graduated container, with a known volume are prepared. The empty graduated container is weighed. A sample of the composition (C) is taken and loaded into the graduated container; the container filled with the sample is weighed and the weight of the empty container is subtracted to obtain the weight of the composition sample (kg). Based on the graduated scale of the transparent container, the volume value (dm$^3$) occupied by the composition sample is read. The weight (kg) to volume (dm$^3$) ratio will give the apparent density of the compound.

Preferably, the first compound (A) has an apparent density comprised between about 370 kg/m$^3$ and about 420 kg/m$^3$.

Preferably, the second compound (B) has an apparent density comprised between about 500 kg/m$^3$ and about 600 kg/m$^3$.

Given the different apparent density of the one and the other compound, it is advisable for the composition (C) to be mechanically mixed before use for injection moulding, so as to guarantee a certain homogeneity of distribution of compound (A) and compound (B) within the volume of the composition (C).

This mechanical mixing is preferably carried out in a mixing silo, preferably characterised by a central mixing screw; still preferably, mixing in the silo takes place for about 180 minutes, at 120 rpm and with a power of 38 KW.

***Injection moulding process, using composition (C).***

A further object of the present invention is a process for injection moulding of artefacts comprising or consisting of composition (C), comprising the steps of:

- preparing the composition (C),

- loading the composition (C) into an injection moulding plant,

- moulding an artefact under the conditions of

     moulding temperature comprised between about 235 °C and 255 °C, preferably comprised between about 240 °C and 250 °C, preferably equal to about 245 °C injection rate comprised between about 2 cm$^3$/s and 4 cm$^3$/s, preferably equal to about 3 cm$^3$/s.

     injection pressure comprised between 600 MPa and 800 MPa, preferably equal to about 700 MPa.

- cooling the artefact to a temperature comprised between 35 °C and 50 °C in a time between 10 seconds and 20 seconds.

It is advisable not to increase or decrease the moulding temperature too much to avoid a lack of reaction of product A and B or a complete degradation of the material by "upsetting" the mechanical properties of the polymer component.

Similarly, the injection rate is best kept relatively low in order to allow the correct reaction between the components of the first compound (A) and the second compound (B) to take place during the plasticisation of the material; it is clear that the injection rate is directly related to the injection pressure (which will therefore have to be adjusted on the basis of the previous parameter).

Preferably, the step of preparing the composition (C) comprises at least the sub-steps of

- preparing a predetermined amount of the composition (C),

- mechanically mix the composition (C) so that the first compound (A) and the second compound (B) are evenly dispersed in the predetermined volume of the composition (C).

This mechanical mixing is preferably carried out in a mixing silo, preferably characterised by a central mixing screw; still preferably, mixing in the silo takes place for about 180 minutes, at 120 rpm and with a power of 38 KW.

**Artefact obtained by the moulding process.**

A further object of the present invention is an artefact (or product) comprising or consisting of composition (C), obtained by injection moulding in accordance with the process described in the previous chapter.

The artefacts that can be obtained by applying the process of the invention on composition (C), as discussed above, meet the technical requirements of the market, although (normally undesirable) volatile gases/compounds are generated during the injection moulding process (a phenomenon that can normally lead to poorly performing products).

By way of example and not limitation, artefacts that can be made in accordance with the invention are, for example, pieces of furniture (chairs, tables), containers (plant pots, home or office containers).

**Process for producing granules of the first compound (A) and the second compound (B).**

Finally, an extrusion process is claimed for producing granules comprising or consisting of the first compound (A), or granules comprising or consisting of the second compound (B), the process comprising the steps of:

- preparing a polymer matrix comprising or consisting of one or more virgin-type thermoplastic polymers, and/or one or more recycled plastic materials, comprising one or more thermoplastic polymers, said one or more thermoplastic polymers including at least polyethylene (PE), polypropylene (PP) or mixtures of the foregoing;

- combining and mixing with the polymer matrix

    at least one inert aesthetic additive, and

    at least one weak organic acid, in the case of the first compound (A), or

    at least one carbonate or bicarbonate salt, in the case of the second compound (B)

so as to obtain a precursor (a) of the first compound (A) or a precursor (b) of the second compound (B),

- loading the precursor (a) of the first compound (A) or the precursor (b) of the second compound (B) into an extruder,

- extruding at an extrusion temperature comprised between about 160 °C and 210 °C, at a number of screw revolutions between about 750 and 900 rpm, to obtain an extrudate of the first compound (A) or an extrudate of the second compound (B),

- cutting the extrudate at a die temperature comprised between about 260° and 280 °C, at a number of blade revolutions between about 1100 and 1300 rpm, to obtain granules of the first compound (A) or granules of the second compound (B).

Preferably, the step of extrusion is carried out at a temperature comprised between 160 °C and 200 °C, preferably between 160 °C and 190 °C, preferably between 160 °C and 180 °C, preferably equal to about 170 °C; and at a number of revolutions preferably between 800 rpm and 900 rpm, preferably between 850 rpm and 900 rpm, preferably equal to about 900 rpm.

Even more preferably, the granule production process comprises a further step, downstream of the extrusion step and prior to the cutting step, wherein the extrudate comprising or consisting of the first compound (A) or the extrudate comprising or consisting of the second compound (B) is filtered using a filter having a mesh size comprised between 1100 $\mu$m and 1400 $\mu$m, preferably equal to 1200 $\mu$m.

This filtration step is functional for the removal of macroscopic impurities within the compounds, while allowing the complete passage of the inert aesthetic additive typical of the composition (C).

Preferably, the step of cutting the extrudate is carried out at a temperature comprised between about 260 °C and 280 °C, at a number of blade revolutions comprised between about 1200 rpm and 1300 rpm, preferably equal to about 1300 rpm.

The operating conditions under which the granule production process is carried out are such as to avoid degradation of the components constituting the first and second compounds, i.e. the polymer component, the acid and the carbonate/bicarbonate, as well as the inert aesthetic additive, without which the composition (C) could not effectively be used for the production of injection-moulded artefacts with the typical aesthetic/surface effect.

According to a preferred embodiment, the polymer matrix may also be admixed with further additives, in addition to the inert aesthetic additive: preferably such further additives are process additives, formula additives and/or dye masters: by way of example and not limitation, additives suitable for the purposes of the invention are antioxidants (e.g. Pentaerythritol tetrakis(3-(3,5-di-tert-butyl-4-hydroxyphenyl)propionate); Tris(2,4-di-tert-butylphenyl) phosphite); UV protectants, such as HALS (hindered amine light stabilisers) (e.g. bis(2,2,6,6-tetramethylpiperidin-4-yl) decanedioate); N,N'-bis(2,2,6,6-tetramethylpiperidin-4-yl)hexane-1,6-diamine;2,4,6-trichloro-1,3,5-triazine2,4,4-trimethylpentan-2-amine); cross-linking agents (Peroxide, [1,4-phenylenebis(1-methylethylidene)]bis[(1,1-dimethylethyl)].

The concentrations at which the at least one inert aesthetic additive, the at least one weak organic acid, in the case of the first compound (A), or the at least one carbonate or bicarbonate salt, in the case of the second compound (B), and the further additives can be added to the polymer matrix are as described in the previous chapters.

It should be noted that common extruded plastic material production plants (more commonly known in the industry as *compounds*), among those known to the person skilled in the art, can be used for producing the first compound (A) and the second compound (B).

The preferred plant for the production of the granules of the first compound (A) and the second compound (B) is the plant described in Italian patent application No. 102022000025578.

According to a preferred embodiment of the granule production process, the cutting step is carried out in a water immersion bath.

Finally, it should be noted that although the granule production process has been described herein only once for the first and second compounds (due to the applicability of the same operating conditions), the first and second compounds are prepared and extruded separately.

## EXAMPLES

By way of illustration and not limitation, two specific examples of composition (C), and the associated injection moulding process, are hereinafter reported.

***Composition (C): Grey polypropylene with granite effect and special mottling.***

$$C = A\ (34\%) + B\ (66\%).$$

$$\text{Recycled plastic content} \geq 66\%$$

Medium-sized granules: 2.4 mm

| PHYSICAL PROPERTIES | METHODOLOGY | UNIT OF MEASUREMENT | RANGE OF VALUES |
|---|---|---|---|
| MFI (A) 230 °C, 16 kg | ISO 1183 | g/10 min | 20.00-25.00 |
| Density 23 °C | ISO 1183 | g/cm3 | 1.039-1.063 |
| XRF | IDO 13 LAB | mg/kg | COMPLIANT |
| XRF TEST Cr | IDO 13 LAB | mg/kg | 0-80 |
| XRF TEST Br | IDO 13 LAB | mg/kg | 0-80 |
| XRF TEST Cd | IDO 13 LAB | mg/kg | 0-32 |
| XRF TEST Sb | IDO 13 LAB | mg/kg | 0-160 |
| XRF TEST Hg | IDO 13 LAB | mg/kg | 0.0-0.5 |

(continued)

| PHYSICAL PROPERTIES | METHODOLOGY | UNIT OF MEASUREMENT | RANGE OF VALUES |
|---|---|---|---|
| XRF TEST Pb | IDO 13 LAB | mg/kg | 0-60 |
| XRF TEST CI | IDO 13 LAB | mg/kg | 0-2000 |
| **MECHANICAL PROPERTIES** | **METHOD** | **UNIT** | **RANGE OF VALUES** |
| Tensile modulus (+23 °C 1 mm/min) | ISO 527 | MPa | >=1100 |
| **IMPACT** | **METHOD** | **UNIT** | **RANGE OF VALUES** |
| Impact resistance on shear specimens - Charpy test (+23 °C) | ISO 179-1/1eA | $KJ/m^2$ | 2.00-7.00 |
| **OTHERS** | **METHOD** | **UNIT** | **RANGE OF VALUES** |
| L' (Colour) (D65) | CIELAB D65 | | 58.26 |
| a' (Colour) (D65) | CIELAB D65 | | -0.36 |
| b' (Colour) (D65) | CIELAB D65 | | 0.01 |

*Conditions for moulding an artefact consisting of the composition (C):*

The recommended parameters for the reaction to take place correctly within the mould and give a clear and satisfactory aesthetic effect are:

- Press temperature 245 °C

- Low injection rate 3 $cm^3$/s

- High injection pressure 700 MPa

The combination of these three parameters makes it possible to obtain the right conditions during the moulding process for the reaction to take place and increase its kinetics in order to optimise the result.

*Compound A: Homopolymer PP Grev 20% mineral filler*

| Element | Percentage by weight | |
|---|---|---|
| Polypropylene | 71% | |
| Polyethylene | 5.3% | 96.3% |
| Carbonate | 20% | |
| Inert aesthetic additive (quartz, CAS No. 14808-60-7) | 1.8% | |
| Citric acid (CAS No. 5949-29-1) | 0.70% | |
| Process additives/dye masters | 1.2% | |

*Conditions for extruding granules of compound A*

Process conditions:

Extruder temperature: 170 °C

Screw Revolutions: 900 rpm

Die temperature: 260° - 280 °C

Blade Revolutions: 1300 rpm.

Medium-sized granules: 2.4 mm

| PHYSICAL PROPERTIES | METHODOLOGY | UNIT | RANGE OF VALUES |
|---|---|---|---|
| MFI (A) 230 °C, 16 kg | ISO 1183 | g/10min | 20.00-25.00 |
| Density 23 °C | ISO 1183 | g/cm$^3$ | 1.039-1.063 |
| XRF | IDO 13 LAB | mg/kg | COMPLIANT |
| XRF TEST Cr | IDO 13 LAB | mg/kg | 0-80 |
| XRF TEST Br | IDO 13 LAB | mg/kg | 0-80 |

| XRF TEST Cd | IDO 13 LAB | mg/kg | 0-32 |
|---|---|---|---|
| XRF TEST Sb | IDO 13 LAB | mg/kg | 0-160 |
| XRF TEST Hg | IDO 13 LAB | mg/kg | 0.0-5.0 |
| XRF TEST Pb | IDO 13 LAB | mg/kg | 0-60 |
| **MECHANICAL PROPERTIES** | **METHOD** | **UNIT** | **RANGE OF VALUES** |
| Tensile modulus (+23 °C 1 mm/min) | ISO 527 | MPa | >=1100 |
| **IMPACT** | **METHOD** | **UNIT** | **RANGE OF VALUES** |
| Impact resistance on shear specimens - Charpy test (+23 °C) | ISO 179-1/1eA | KJ/m$^2$ | 2.00-7.00 |
| **OTHERS** | **METHOD** | **UNIT** | **RANGE OF VALUES** |
| L' (Colour) (D65) | CIELAB D65 | | 58.26 |
| a' (Colour) (D65) | CIELAB D65 | | -0.36 |
| b' (Colour) (D65) | CIELAB D65 | | 0.01 |

*Compound B: Homopolymer PP Grev 10% mineral filler*

| Element | Percentage by weight | |
|---|---|---|
| Polypropylene | 81% | |
| Polyethylene | 5.6% | 95.6% |
| Carbonate | 10% | |
| Inert aesthetic additive (quartz, CAS No. 14808-60-7) | 1.8% | |
| Sodium bicarbonate (CAS No. 144-55-8) | 1.4% | |
| Process additives/dye masters | 1.2% | |

*Conditions for the extrusion of compound B granules*

Process conditions:

Extruder temperature: 170 °C

Screw Revolutions: 900 rpm

Die temperature: 260° - 280 °C

Blade Revolutions: 1300 rpm.

Medium-sized granules: 2.4 mm

| PHYSICAL PROPERTIES | METHODOLOGY | UNIT | RANGE OF VALUES |
|---|---|---|---|
| MFI (A) 230 °C, 16 kg | ISO 1183 | g/10min | 20.00-25.00 |
| Density 23 °C | ISO 1183 | g/cm$^3$ | 1.039-1.063 |
| XRF | IDO 13 LAB | mg/kg | COMPLIANT |
| XRF TEST Cr | IDO 13 LAB | mg/kg | 0-80 |
| XRF TEST Br | IDO 13 LAB | mg/kg | 0-80 |
| XRF TEST Cd | IDO 13 LAB | mg/kg | 0-32 |
| XRF TEST Sb | IDO 13 LAB | mg/kg | 0-160 |
| XRF TEST Hg | IDO 13 LAB | mg/kg | 0.0-5.0 |
| XRF TEST Pb | IDO 13 LAB | mg/kg | 0-60 |
| MECHANICAL PROPERTIES | METHOD | UNIT | RANGE OF VALUES |
| Tensile modulus (+23 °C 1mm/min) | ISO 527 | MPa | >=1100 |
| IMPACT | METHOD | UNIT | RANGE OF VALUES |
| Impact resistance on shear specimens - Charpy test (+23 °C) | ISO 179-1/1eA | KJ/m$^2$ | 2.00-7.00 |
| OTHERS | METHOD | UNIT | RANGE OF VALUES |
| L' (Colour) (D65) | CIELAB D65 | | 58.26 |
| a' (Colour) (D65) | CIELAB D65 | | -0.36 |
| b' (Colour) (D65) | CIELAB D65 | | 0.01 |

**Claims**

1. Composition (C) for the injection moulding of artefacts, comprising or consisting of:

    - a first compound (A), which includes

        a polymer matrix,
        at least one weak organic acid
        at least one inert aesthetic additive

    - a second compound (B), which includes

        a polymer matrix,
        at least one carbonate or bicarbonate salt
        at least one inert aesthetic additive, said at least one inert aesthetic additive being the same or different from the first inert aesthetic additive

    **wherein**

the first compound (A) is in a concentration comprised between 34% and 40% by weight on the total weight of the composition,

the second compound (B) is in a concentration comprised between 60% and 66% by weight on the total weight of the composition,

the first compound (A) and the second compound (B) are in the form of granules,

the polymer matrix comprises or consists of:

- one or more virgin-type thermoplastic polymers, and/or
- one or more recycled plastic materials, comprising the one or more thermoplastic polymers,

said one or more thermoplastic polymers including at least polyethylene (PE), polypropylene (PP) or mixtures of the foregoing,

optionally, one or more mineral fillers, and

the at least one weak organic acid is a dicarboxylic acid, preferably selected from the group consisting of citric acid, azelaic acid, adipic acid, tartaric acid, malic acid, fumaric acid and combinations of the foregoing.

2. Composition according to claim 1, wherein

- the first compound (A), includes

the polymer matrix in a concentration comprised between about 94% and 98% by weight on the total weight of the first compound (w/w),

the at least one weak organic acid in a concentration comprised between about 0.5% and 0.8% (w/w),

the at least one inert aesthetic additive in a concentration comprised between about 1.2% and 4.5% (w/w).

- the second compound (B), which includes

the polymer matrix, in a concentration comprised between about 94% and 98% by weight on the total weight of the second compound (w/w),

the at least one carbonate or bicarbonate salt, in a concentration comprised between about 1% and 2.7% (w/w),

the at least one inert aesthetic additive in a concentration comprised between about 1% and 3.3% (w/w).

3. Composition according to claim 1 or 2, wherein the at least one carbonate or bicarbonate salt is a sodium or potassium salt or mixtures of the foregoing.

4. Composition according to any one of claims from 1 to 3, wherein the inert aesthetic additive is selected from the group consisting of: quartz, slate, vulcanised tyres, wood and mixtures of the foregoing.

5. Composition according to any one of claims from 1 to 4, having a water content comprised between 0.05% and 0.15% by weight on the total weight of the composition.

6. Composition according to any one of claims from 1 to 5, comprising a recycled plastic content $\geq$ 66% by weight on the total weight of the composition (w/w).

7. Composition according to any one of claims from 1 to 6, wherein the first compound (A) and the second compound (B) are in granule form, preferably having an average size comprised between 1.9 mm and 3.0 mm.

8. Process for injection moulding of an artefact comprising or consisting of the composition according to any one of claims from 1 to 7, comprising the steps of:

- preparing the composition (C),
- loading the composition (C) into an injection moulding plant,
- moulding an artefact under the conditions of

moulding temperature comprised between about 235 °C and 255 °C, and

injection rate comprised between about 2 $cm^3$/s and 4 $cm^3$/s, and

injection pressure comprised between 600 MPa and 800 MPa

- cooling the artefact to a temperature comprised between 35 °C and 50 °C, in a time comprised between 10 seconds and 20 seconds.

9. Extrusion process for the production of granules comprising or consisting of the first compound (A), or of granules comprising or consisting of the second compound (B), comprising the steps of:

- preparing a polymer matrix comprising or consisting of one or more virgin-type thermoplastic polymers, and/or one or more recycled plastic materials, comprising the one or more thermoplastic polymers, said one or more thermoplastic polymers including at least polyethylene (PE), polypropylene (PP) or mixtures of the foregoing, and optionally one or more mineral fillers;
- combining and mixing with the polymer matrix

at least one inert aesthetic additive, and
at least one weak organic acid, in the case of the first compound (A), or
at least one carbonate or bicarbonate salt, in the case of the second compound (B)

so as to obtain a precursor (a) of the first compound (A) or a precursor (b) of the second compound (B),
- loading the precursor (a) of the first compound (A) or the precursor (b) of the second compound (B) into an extruder,
- extruding at an extrusion temperature comprised between 160 °C and 210 °C (170 °C), at a number of screw revolutions comprised between 750 and 900 rpm, to obtain an extrudate of the first compound (A) or an extrudate of the second compound (B),
- cutting the extrudate at a die temperature comprised between 260° and 280 °C, at a number of blade revolutions comprised between 1100 and 1300 rpm, to obtain granules of the first compound (A) or granules of the second compound (B).

10. Process according to claim 9, wherein the cutting step is carried out in a water immersion bath.

11. Process according to claim 9 or 10, further comprising a step of filtering the granules of the first compound (A) or the granules of the second compound (B), using a filter with a mesh size comprised between 1100 $\mu$m and 1300 $\mu$m.

Figure 1

Component 1
(e.g. isocyanate)

Controlled temperatur
e and pressure
measuring unit.

Component 2
(e.g. polyol)

Mould lid

Mould cavity

Mixing head

Low-pressure
mould

Figure 2

BASIC DIAGRAM OF THE INJECTION UNIT

Figure 3

Europäisches
Patentamt

European
Patent Office

Office européen
des brevets

# EUROPEAN SEARCH REPORT

Application Number

EP 24 15 4110

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/078682 A1 (ARCELIK AS [TR]) 23 April 2020 (2020-04-23) * paragraph [0007] – paragraph [0008] * * paragraph [0028] * * paragraph [0036] * * table 1 * * paragraph [0055]; table 2 * * table 3 * * claims * * figures 1,2 * | 1-3 | INV. C08K3/26 C08K3/36 C08K5/092 C08L23/12 B29C44/42 |
| X | DATABASE WPI Week 2023007 Thomson Scientific, London, GB; AN 2023-04349W XP002809912, -& KR 2023 0001420 A (NUTRIFEED CO LTD AGRIC CORP) 4 January 2023 (2023-01-04) * abstract * * paragraph [0036] – paragraph [0038] * * claim * | 1-3 | |
| A | US 5 212 223 A (MACK WOLFGANG A [US] ET AL) 18 May 1993 (1993-05-18) * figure 1 * * examples 3,4; tables 2,3 * * claims 1-9 * | 1-11 | TECHNICAL FIELDS SEARCHED (IPC) C08K C08L B29C |
| A | DATABASE WPI Week 201430 Thomson Scientific, London, GB; AN 2014-A46540 XP002809913, -& KR 2013 0140346 A (HO C S) 24 December 2013 (2013-12-24) * abstract * * claims * | 1-11 | |

The present search report has been drawn up for all claims

| Place of search | Date of completion of the search | Examiner |
|---|---|---|
| Munich | 14 May 2024 | Russell, Graham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 4110

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2024

| Patent document cited in search report | | Publication date | Patent family member(s) | | Publication date |
|---|---|---|---|---|---|
| WO 2020078682 | A1 | 23-04-2020 | NONE | | |
| KR 20230001420 | A | 04-01-2023 | NONE | | |
| US 5212223 | A | 18-05-1993 | AT | E168710 T1 | 15-08-1998 |
| | | | AU | 651187 B2 | 14-07-1994 |
| | | | CA | 2102206 A1 | 06-09-1992 |
| | | | DE | 69226359 T2 | 01-04-1999 |
| | | | DK | 0576535 T3 | 26-04-1999 |
| | | | EP | 0576535 A1 | 05-01-1994 |
| | | | ES | 2123552 T3 | 16-01-1999 |
| | | | US | 5212223 A | 18-05-1993 |
| | | | WO | 9215640 A1 | 17-09-1992 |
| | | | ZA | 921291 B | 27-05-1993 |
| KR 20130140346 | A | 24-12-2013 | NONE | | |

EPO FORM P0459

For more details about this annex : see Official Journal of the European Patent Office, No. 12/82

**EP 4 406 999 A1**

**Non-patent literature cited in the description**

- *CHEMICAL ABSTRACTS,* 14808-60-7
- *CHEMICAL ABSTRACTS,* 5949-29-1